# EUROPÄISCHE PATENTSCHRIFT

(11) **EP 0 539 623 B1**
(45) Veröffentlichungstag und Bekanntmachung des Hinweises auf die Patenterteilung: **09.08.1995**
(21) Anmeldenummer: 91118661.7
(22) Anmeldetag: 31.10.1991
(51) Int. Cl.: H02G 11/00

(54) **Leitungsführungsanordnung**
Guiding device for conductor
Dispositif de guidage pour conducteur

(43) Veröffentlichungstag der Anmeldung: 05.05.1993
(73) Patentinhaber: W.L. Gore & Associates GmbH, 85636 Putzbrunn (DE)
(72) Erfinder: Meier, Karl, W-8548 Heideck (DE); Steff, Josef, W-8831 Meinheim (DE)
(74) Vertreter: Klunker . Schmitt-Nilson . Hirsch

(56) Entgegenhaltungen:
- EP-A- 0 260 225
- FR-A- 2 426 005
- US-A- 2 935 080

## Beschreibung

Die Erfindung betrifft eine Leitungsführungsanordnung für eine eine oder mehrere Leitungen aufweisende Leitungsanordnung, die ein erstes Trum und ein parallel dazu verlaufendes zweites Trum aufweist, wobei die Trumenden mit einer feststehenden bzw. mit einer in Leitungslängsrichtung hin- und herbeweglichen Einrichtung verbunden sind und die beiden Trums in einem dazwischen befindlichen Biegungsbereich schleifenartig ineinander übergehen und wobei die Leitungsanordnung mindestens in dem Bereich, mit dem die beiden Trums zueinander weisen, mit Material guter Aneinandergleitfähigkeit versehen ist.

In der europäischen Patentanmeldung EP-A-0 490 022 ist eine Leitungsführungsanordnung mit einem Leitungsführungskanal und einer darin geführten Leitungsanordnung bekannt, die eine feststehende Einrichtung mit einer hin- und herbeweglichen Einrichtung miteinander verbindet, die an die Enden eines Obertrums bzw. Untertrums angeschlossen sind. Die beiden Trums gehen in einem dazwischen befindlichen Biegebereich schleifenartig ineinander über. Bei größerer Obertrumlänge legt sich das Obertrum auf das Untertrum ab. Mindestens auf derjenigen Seite der Leitungsanordnung, mit welcher Obertrum und Untertrum zueinander weisen, ist die Leitungsanordnung mit einem Material guter Aneinandergleitfähigkeit versehen.

Mit einer derartigen Leitungsführungsanordnung lassen sich herkömmliche Schleppketten ersetzen, die aufwendig sind, zu einer erheblichen mechanischen Belastung der in ihr geführten Leitungen führen können und die im Bewegungsbetrieb störende Geräusche verursachen können.

Bei der in der EP-A-0 490 022 beschriebenen Leitungsanordung kann es bei den raschen Bewegungen, welche die hin- und herbewegliche Einrichtung, beispielsweise ein Roboter, ausüben kann, zu Schwingungen, insbesondere im Obertrumbereich kommen.

Sowohl die Leitungs- oder Kabelmäntel als auch die Gleiteinrichtung der Leitungsanordnung bestehen vorzugsweise aus Kunststoff. Kommt es zu längerem Stillstand der beweglichen Einrichtung, so daß sich der Biegungsbereich zwischen Obertrum und Untertrum längere Zeit an derselben Stelle der Leitungsanordnung befindet, kann es an dieser Stelle zu einer bleibenden Verformung der Leitungsanordnung kommen, beispielsweise in Form von Buckelbildung. Wird danach die Bewegung der beweglichen Einrichtung wieder aufgenommen, kann es dann bei den hohen Bewegungsgeschwindigkeiten, welche solche beweglichen Einrichtungen einnehmen können, zu Stauchungen oder gar Verwerfungen der Leitungsanordnung im Buckelbereich kommen. Daraus können Beschädigungen der Leitungsanordnung resultieren.

Aus der Druckschrift US-A-3,630,325 ist eine Leitungsführungsanordnung mit einer eine oder mehrere Leitungen aufweisende Leitungsanordnung bekannt, die ein erstes Trum und ein parallel dazu verlaufendes zweites Trum aufweist. Die Trumendungen sind mit einer feststehenden bzw. mit einer hin- und herbewegbaren Einrichtung verbunden. Die beiden Trums gehen in einem Biegungsbereich ineinander über und sind in einem Bereich, in dem die beiden Trums zueinander weisen, aus einem Material guter Gleitfähigkeit gefertigt. Auch diese aus dem Stand der Technik bekannte Anordnung teilt somit die vorstehend diskutierten Nachteile.

Aus der Druckschrift US-A-2,935,080 ist eine Leitungsführungsanordnung bekannt, bei der eine Rolle derart vorgesehen ist, daß bei einer Bewegung der beweglichen Einrichtung die Leitungsanordnung auf der Rolle abrollt. Durch die Rolle soll nicht das Aufeinandergleiten von Obertrum und Untertrum unterstützt werden; vielmehr soll durch die Rolle sichergestellt werden, daß eine genügende Zugspannung auf die Leitungsanordnung ausgeübt wird, so daß das Aufeinandergleiten verhindert wird.

Der Erfindung liegt die Aufgabe zugrunde, im Hinblick auf die geschilderten Nachteile auf möglichst einfache und kostengünstige Weise Abhilfe zu schaffen.

Diese Aufgabe wird für eine Leitungsführungsanordnung nach dem Oberbegriff des neuen unabhängigen Patentanspruches 1 gelöst durch dessen kennzeichnenden Merkmale. Den abhängigen Patentansprüchen 2-9 sind jeweils vorteilhafte, nichttriviale Weiterbildungen des Gegenstandes derjenigen Patentansprüche, auf die sie jeweils rückbezogen sind, entnehmbar.

Ein Aspekt der Lösung dieser Aufgabe besteht darin, bei der eingangs genannten Leitungsführungsanordnung eine Rolle vorzusehen, die in den Biegungsbereich zwischen den beiden Trums eingebracht ist, derart, daß bei einer Bewegung der beweglichen Einrichtung die Leitungsanordnung auf der Rolle abrollt.

Vorzugsweise ist die Rolle lose in den Biegungsbereich eingebracht. Um eine gute Seitenführung der Leitungsanordnung zu gewährleisten, wird sie bevorzugterweise zusammen mit der Rolle in einem Leitungsführungskanal geführt.

Bei einer besonders bevorzugten Ausführungsform ist der Rollendurchmesser größer als der Biegungsdurchmesser des Biegungsbereich der Leitungsanordnung ohne Rolle, wobei sich dieser Biegungsdurchmesser aus dem Eigengewicht und dem Biegewiderstand der Leitungsanordnung ergibt. Vorteilhafterweise ist der Rollendurchmesser um so viel größer als der maximale Biegungsdurchmesser der Leitungsanordnung ohne Rolle, daß sich der über der Rolle befindliche Bereich der Leitungsanordnung mit seinem gesamten Eigengewicht auf der Rolle abstützt. Man kann den Rollendurchmesser so viel größer als den Biegungsdurchmesser machen, daß die Rolle im Biegungsbereich zu mehr als 180°, möglicherweise bis zu etwa 240°, umschlungen wird.

Zwischen dem Außenumfang der Rolle und dem auf der Rolle abrollenden Bereich der Leitungsanordnung sollte ein derartiger Kraftschluß (beispielsweise durch Reibung) oder Formschluß (beispielsweise durch Zahneingriff) bestehen, daß die auch bei maximaler Bewegungsgeschwindigkeit der auf die Rolle zu bewegten beweglichen Einrichtung ein Schlupf zwischen der Rolle und der Leitungsanordnung vermieden wird.

Vorzugsweise macht man die Rolle etwa so breit wie die Leitungsanordnung. Außerdem kann man das Außenprofil der Rolle an das Profil des auf ihr abrollenden Bereichs der Leitungsanordnung anpassen.

Die Masse der Rolle sollte so gering wie möglich sein.

Als Materialien werden bevorzugt: Für die Rolle: Polypropylen, Polyamid, POM, PVC.

Für die Gleiteinrichtung der Leitungsanordnung: Polypropylen.

Für den Kabelmantel der Leitung: PVC, Polyurethane, Polyester.

Man kann die Rolle aus einem festen, leichten Kunststoff bekannter Art herstellen und auf ihren Außenumfang zur Erhöhung der Reibung zwischen der Leitungsanordnung und der Rolle einen Mantel aus Material hohen Reibungsfaktors, beispielsweise Gummi, aufbringen.

Die erfindungsgemäße Maßnahme führt dazu, daß die Leitungsanordnung im Biegungsbereich immer auf konstantem Biegeradius gehalten wird, auch bei starker Beschleunigung oder Verzögerung der beweglichen Einrichtung und damit des an diese angeschlossenen Trums der Leitungsanordnung. Außerdem kann man durch Wahl des Rollendurchmessers den Biegeradius im Biegungsbereich der Leitungsanordnung einstellen. Ein höherer Biegeradius führt zu einer höheren Lebendauer der Leitungsanordnung. Auch wenn die bewegliche Einrichtung für längere Zeit stillsteht, kommt es nicht zu Knick- oder Buckelbildungen im Biegungsbereich aufgrund des Eigengewichtes der Leitungsanordnung, da sich die Leitung im Biegungsbereich auf der Rolle abstützt.

Außerdem hat sich herausgestellt, daß sich die erfindungsgemäße Rolle als Dämpfungsglied auswirkt, d. h., es treten wesentlich weniger Schwingungen im Gesamtsystem auf, als ohne Rolle.

Die Erfindung wird nun anhand von Ausführungsformen näher erläutert. In der Zeichnung zeigen:
- Fig. 1: eine schematischen Seitenansicht einer erfindungsgemäßen Leitungsanordnung mit Rolle in einer ersten Bewegungsphase;
- Fig. 2: die in Fig. 1 gezeigte Leitungsanordnung in einer zweiten Bewegungsphase; und
- Fig. 3 - 5: Rollen mit unterschiedlicher Oberflächengestaltung.

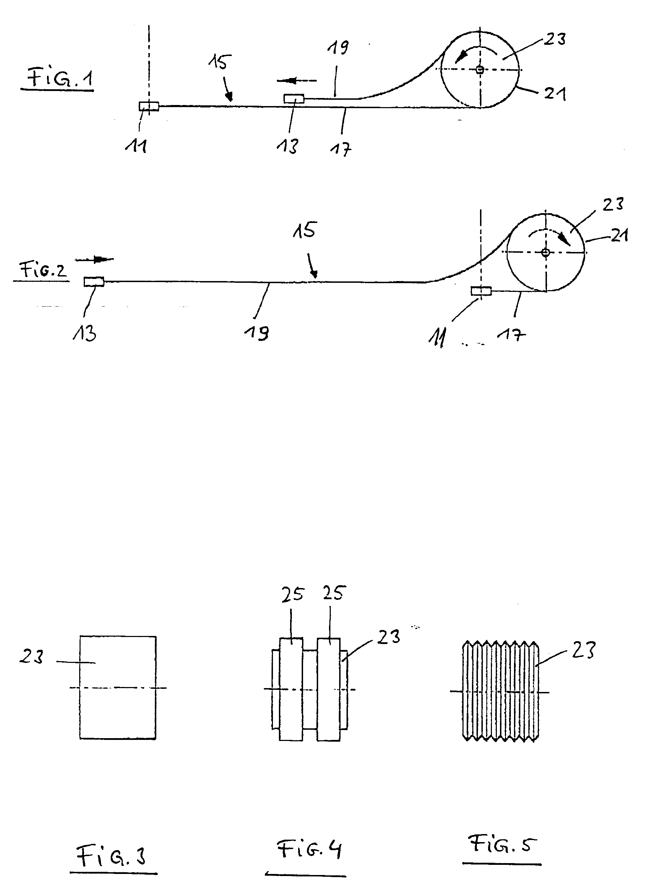

Fig. 1 zeigt in schematischer Andeutung eine feststehende Einrichtung 11 und eine hin- und herbewegliche Einrichtung 13, die über eine Leitungsanordnung 15 miteinander verbunden sind.

Bei der in den Fig. 1 und 2 gezeigten Ausführungsform bewegt sich die bewegliche Einrichtung 13 horizontal. Die vorliegende Erfindung wäre aber genauso gut realisierbar bei einer Ausführungsform, bei welcher sich die bewegliche Einrichtung 13 in Vertikalrichtung oder auch in einer dazu geneigten Richtung bewegt.

Bei der dargestellten Ausführungsform weist die Leitungsanordnung 15 ein Untertrum 17 und ein Obertrum 19 auf, die über einen Biegungsbereich 21 miteinander verbunden sind. Im Biegungsbereich 21 rollt die Leitungsanordnung 15 über eine lose eingebrachte Rolle 23 ab. Bei entsprechend großer Länge des Obertrums 19 legt sich dessen an die bewegliche Einrichtung 13 anschließender Bereich auf dem Untertrum 17 ab. Die Leitungsanordnung 15 ist auf derjenigen Seite, mit welcher Untertrum 17 und Obertrum 19 zueinander weisen, mit einer (in den Zeichnungen nicht dargestellten) Gleiteinrichtung versehen. Dadurch wird vermieden, daß die Leitungen oder Kabel, deren Leitungs- bzw. Kabelmäntel üblicherweise aus einem Material mit hohem Reibungsfaktor bestehen, direkt aufeinander reiben. Gleiteinrichtungen, die für eine derartige, einen Schleppkettenersatz bildende Leitungsanordnung geeignet sind, sind in der EP-A-0 490 022 beschrieben.

Während in Fig. 1 eine Bewegungsphase dargestellt ist, in welcher sich die bewegliche Einrichtung 13 von der Rolle 23 weg bewegt, zeigt Fig. 2 eine Bewegungsphase, in welcher sich die bewegliche Einrichtung 13 zur Rolle 23 hin bewegt.

Die Fig. 3 bis 5 zeigen unterschiedliche Rollenausführungen. Die in Fig. 3 gezeigte Rolle weist einen glatten Außenumfang auf. Dieser ist beispielsweise aus Gummi gebildet, um gegenüber dem Material der Gleiteinrichtung der Leitungsanordnung 15 eine hohe Reibung zu bewirken. Die Breite der Rolle 23 ist vorzugsweise gleich der Breite der Leitungsanordnung 15. Die Rolle 23 kann aber auch schmaler oder breiter als die Leitungsanordnung 15 sein.

Die in Fig. 4 gezeigte Rollenausführung ist hinsichtlich ihres Umfangprofils an das Profil derjenigen Seite der Leitungsanordnung 15 angepaßt, die auf der Rolle 23 abrollt. Das in Fig. 4 gezeigte Rollenprofil ist für eine Leitungsanordnung gedacht, wie sie in Fig. 28 der EP 91 105 430.2 gezeigt ist. Dort sind zwei nebeneinander angeordnete Bandkabel an ihren beiden Längsseitenrändern mit je einer Gleitrinne versehen und die vier Gleitrinnen sind mit Querlaschen aneinander befestigt. Zu diesem Zweck weist die in Fig. 4 gezeigte Rolle 23 Umfangsrippen 25 auf, die zwischen den Gleitrinnen zu liegen kommen und in direkter Berührung mit dem Kabelmantel je eines der beiden Bandkabel stehen. Dadurch kommt man einerseits zu einer relativ hohen Reibungskraft zwischen der Rolle 23 und dem Kabel der Leitungsanordnung und außerdem erreicht man damit eine axiale Führung der Rolle 23 bezüglich der Leitungsanordnung.

Die in Fig. 5 gezeigte Rolle weist einen gerillten Außenumfang auf, was wiederum sowohl die Reibungskraft als auch die axiale Führung zwischen Leitungsanordnung 15 und Rolle 23 verbessert.

Nicht dargestellt ist in den Zeichnungen ein Leitungsführungskanal, wie er in Fig. 2 der EP 91 105 430.2 gezeigt ist und der für eine Seitenführung sowohl der Leitungsanordnung 15 als auch der darin eingebrachten Rolle 23 sorgt.

Der Begriff "Rolle" ist vorliegend sehr allgemein zu verstehen. Er soll hier walzenartige Gebilde, entweder massiv oder hohl, kugelartige Gebilde und polygonale Gebilde umfassen.

## Patentansprüche

1. Leitungsführungsanordnung für eine eine oder mehrere Leitungen aufweisende Leitungsanordnung (15),
a) die ein erstes Trum (17) und ein parallel dazu verlaufendes zweites Trum (19) aufweist,
b) wobei die Trumenden mit einer feststehenden (11) bzw. einer hin- und herbeweglichen Einrichtung (13) verbunden sind und
c) die beiden Trums (17, 19) in einem dazwischen befindlichen Biegungsbereich (21) schleifenartig ineinander übergehen und
d) wobei die Leitungsanordnung (15) mindestens in dem Bereich, in dem die beiden Trums (17, 19) zueinander weisen, mit Material guter Aneinandergleitfähigkeit versehen ist,
**gekennzeichnet durch**
e) eine Rolle (23), die in den Biegungsbereich (21) eingebracht ist, derart, daß bei einer Bewegung der beweglichen Einrichtung die Leitungsanordnung (15) auf der Rolle (23) abrollt.

2. Leitungsführungsanordnung nach Anspruch 1,
dadurch gekennzeichnet,
daß die Rolle (23) lose in den Biegungsbereich (21) eingebracht ist.

3. Leitungsführungsanordnung nach Anspruch 1 oder 2
dadurch gekennzeichnet,
daß die Leitungsanordnung (15) mit der Rolle (23) in einem Leitungsführungskanal geführt ist.

4. Leitungsführungsanordnung nach einem der Ansprüche 1 bis 3,
dadurch gekennzeichnet,
daß zwischen der Oberfläche der Rolle (23) und der darauf abrollenden Oberfläche der Leitungsanordnung (15) ein kraftschlüssiger oder formschlüssiger Eingriff besteht.

5. Leitungsführungsanordnung nach einem der Ansprüche 1 bis 4,
dadurch gekennzeichnet,
daß das Profil des Außenumfangs der Rolle (23) in komplementärer Weise an das Profil des auf der Rolle (23) abrollenden Oberflächenbereichs der Leitungsanordnung (15) angepaßt ist.

6. Leitungsführungsanordnung nach einem der Ansprüche 1 bis 5,
dadurch gekennzeichnet,
daß der Rollendurchmesser größer ist als der maximale Biegungsdurchmesser, den die Leitungsanordnung (15) im Bewegungsbetrieb ohne Rolle (23) einnehmen würde.

7. Leitungsführungsanordnung nach Anspruch 6,
dadurch gekennzeichnet,
daß der Rollendurchmesser um soviel größer ist als der maximale Biegungsdurchmesser der Leitungsanordnung ohne Rolle, daß sich der über der Rolle (23) befindliche Bereich der Leitungsanordnung (15) mit seinem gesamten Eigengewicht auf der Rolle (23) abstützt.

8. Leitungsführungsanordnung nach Anspruch 7,
dadurch gekennzeichnet,
daß der Rollendurchmesser um soviel größer ist als der maximale Biegungsdurchmesser der Leitungsanordnung (15) ohne Rolle, daß die Leitungsanordnung (15) die Rolle (23) zu mehr als 180°, vorzugsweise bis etwa 240°, umschlingt.

9. Leitungsführungsanordnung nach einem der Ansprüche 6 bis 8,
dadurch gekennzeichnet,
daß der Rollendurchmesser mindestens 50 mm größer ist als der Biegungsdurchmesser der Leitungsanordnung ohne Rolle.

## Claims

1. A line guiding assembly for a line assembly (15) including one or more lines and comprising
a) a first length (17) and a second length (19) extending parallel thereto,
b) the length ends being connected to a stationary means (11) and to a reciprocable means (13), respectively, and
c) the two lengths (17, 19) merging with each other in loop-shaped manner in a bending portion (21) located therebetween, and
d) the line assembly (15), at least in the portion in which the two lengths (17, 19) are facing each other, being provided with a material having good slidability for sliding on each other,
characterized by
e) a roller (23) introduced in the bending portion (21) in such a manner that, upon movement of the movable means, the line assembly (15) performs a rolling motion on the roller (23).

2. A line guiding assembly according to claim 1,
characterized in that the roller (23) is loosely inserted in the bending portion (21).

3. A line guiding assembly according to claim 1 or 2,
characterized in that the line assembly (15) together with the roller (23) is guided in a line guiding channel.

4. A line guiding assembly according to any one of claims 1 to 3,
characterized in that frictional or positive engagement is present between the surface of the roller (23) and the surface of the line assembly (15) performing a rolling motion thereon.

5. A line guiding assembly according to any one of claims 1 to 4,
characterized in that the profile of the outer circumference of the roller (23) is adapted in complementary manner to the profile of the surface portion of the line assembly (15) performing a rolling motion on roller (23).

6. A line guiding assembly according to any one of claims 1 to 5,
characterized in that the roller diameter is larger than the maximum bending diameter that would be assumed by the line assembly (15) in moving operation without the roller (23).

7. A line guiding assembly according to claim 6,
characterized in that the roller diameter is larger than the maximum bending diameter of the line assembly without the roller by such an extent that the portion of the line assembly (15) located above the roller (23) is supported on the roller (23) with its entire own weight.

8. A line guiding assembly according to claim 7,
characterized in that the roller diameter is larger than the maximum bending diameter of the line assembly (15) without the roller by such an amount that the line assembly (15) is wrapped around the roller (23) by more than 180°, preferably up to approx. 240°.

9. A line guiding assembly according to any one of claims 6 to 8,
characterized in that the roller diameter is at least 50 mm larger than the bending diameter of the line assembly without roller.

## Revendications

1. Agencement de guidage de conduites pour un agencement de conduites (15) comportant une ou plusieurs conduites,
a) qui comporte un premier brin (17) et un deuxième brin (19) qui s'étend parallèlement au premier,
b) dans lequel les extrémités des brins sont reliées à un dispositif fixe (11) ou à un dispositif (13) mobile dans un sens et dans l'autre et
c) les deux brins (17, 19) se font suite mutuellement à la manière d'une boucle dans un domaine de flexion (21) situé entre eux et
d) dans lequel l'agencement de conduites (15) est muni d'un matériau de bonne capacité de glissement mutuel dans le domaine dans lequel les deux brins (17, 19) sont tournés l'un vers l'autre,
caractérisé par
e) une bobine (23) qui est disposée dans le domaine de flexion (21) de manière que l'agencement de conduites (15) défile sur la bobine (23) lors d'un mouvement du dispositif mobile.

2. Agencement de guidage de conduites selon la revendication 1, caractérisé en ce que la bobine (23) est disposée de manière lâche dans le domaine de flexion (21).

3. Agencement de guidage de conduites selon la revendication 1 ou 2, caractérisé en ce que l'agencement de conduites (15) est guidé avec la bobine (23) dans un canal de guidage de conduites.

4. Agencement de guidage de conduites selon l'une des revendications 1 à 3, caractérisé en ce qu'il existe un contact par assemblage par force ou par assemblage de formes entre la surface de la bobine (23) et la surface de l'agencement de conduites (15) qui défile sur elle.

5. Agencement de guidage de conduites selon l'une des revendications 1 à 4, caractérisé en ce que le profil de la périphérie externe de la bobine (23) est adapté de manière complémentaire au profil du domaine superficiel de l'agencement de conduites (15) qui défile sur la bobine (23).

6. Agencement de guidage de conduites selon l'une des revendications 1 à 5, caractérisé en ce que le diamètre de la bobine est supérieur au diamètre de flexion maximal que revêtirait l'agencement de conduites (15) en fonctionnement avec mouvement sans bobine (23).

7. Agencement de guidage de conduites selon la revendication 6, caractérisé en ce que le diamètre de la bobine est supérieur au diamètre de flexion maximal de l'agencement de conduites sans bobine dans une mesure telle que le domaine de l'agencement de conduites (15) qui se trouve au-dessus de la bobine (23) s'appuie de tout son poids propre sur la bobine (23).

8. Agencement de guidage de conduites selon la revendication 7, caractérisé en ce que le diamètre de la bobine est supérieur au diamètre de flexion maximal de l'agencement de conduites (15) sans bobine dans une mesure telle que l'agencement de conduites (15) entoure la bobine (23) à raison de plus de 180°, de préférence à raison de jusqu'à environ 240°.

9. Agencement de guidage de conduites selon l'une des revendications 6 à 8, caractérisé en ce que le diamètre de la bobine est supérieur d'au moins 50 mm au diamètre de flexion de l'agencement de conduites sans bobine.
